# EUROPEAN PATENT SPECIFICATION

(11) **EP 4 357 011 B1**
(45) Date of publication and mention of the grant of the patent: **20.05.2026**
(21) Application number: 21946116.7
(22) Date of filing: 20.10.2021
(51) Int. Cl.: B28C 5/06, B28C 1/02, B28C 7/00, C01F 11/46

(54) **METHOD FOR MIXING GYPSUM GRANULES DERIVED FROM WASTE GYPSUM BOARD AND GYPSUM SLURRY**
VERFAHREN ZUM MISCHEN VON GIPSGRANULAT AUS GIPSABFALLPLATTEN UND GIPSSUSPENSION
PROCÉDÉ POUR MÉLANGER DES GRANULES DE GYPSE DÉRIVÉS DE PLAQUES DE GYPSE RÉSIDUAIRES ET DE SUSPENSION DE GYPSE

(30) Priority: 16.06.2021 JP 2021100107
(43) Date of publication of application: 24.04.2024
(73) Proprietor: Tokuyama Corporation, Shunan-shi, Yamaguchi 745-8648 (JP)
(72) Inventor: MATSUO, Kentarou, Shunan-shi, Yamaguchi 745-8648 (JP); HIRANAKA, Shingo, Shunan-shi, Yamaguchi 745-8648 (JP)
(74) Representative: Kuhnen & Wacker Patent- und Rechtsanwaltsbüro PartG mbB
(86) International application number: PCT/JP2021/038758
(87) International publication number: WO 2022/264445

(56) References cited:
- WO-A1-2014/141926
- WO-A1-2016/199953
- WO-A1-2019/058936
- JP-A- 2016 117 617
- JP-A- 2020 105 045
- JP-A- H08 196 890
- US-A1- 2005 039 508

## Description

### Field of the Invention

The present invention relates to the mixing of the gypsum granules derived from wasted gypsum boards and gypsum slurry.

### Background Art

The present inventors have been studying the recovery of dihydrate gypsum from wasted gypsum boards. In Patent Document 1 (JP 6 336 385 B), one of the inventors has proposed a cylindrical mixing device 40 shown in Fig. 5. First the wasted gypsum boards are crushed, and then, the resultant gypsum is heated and converted to hemihydrate and/or anhydrous type III gypsum granules. Then, the gypsum granules are fed into gypsum slurry 44 within the mixing device from a feed inlet 41. The slurry 44 containing dihydrate gypsum is fed in a tangential direction into the cylinder of the mixing device from a slurry inlet 42 on the side of the cylinder, and the slurry after the mixing is discharged from a slurry outlet 43 into a deposition tank. The slurry 44 is made to swirl in the mixing device 40 such that air is prevented from being entrained in the slurry 44. This prevents cavitation when the slurry is pumped from the mixing device 40 to the deposition tank. Further, in order to prevent no-flow areas from occurring in the center of the mixing device 40, a pipe 45 is provided in the center. In addition, an exhaust port 47 is provided to prevent pressure buildup in the device.

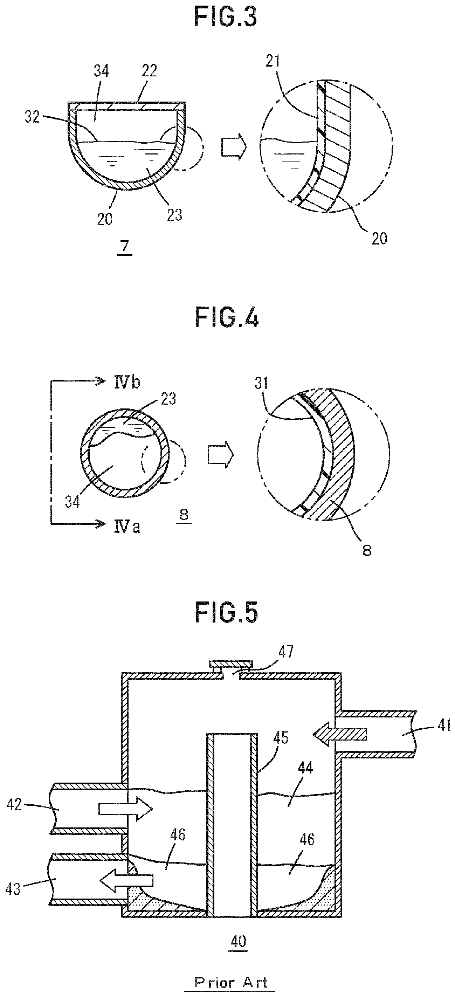

However, the inventors have found that the mixing device 40 shown in Fig. 5 tends to generate scale 46 of gypsum, deposit of gypsum, on a range from the bottom portion of the mixing device to the side portion. This scale 46 sticks to the inner walls of the mixing device 40 tightly and is extremely hard. It is inefficient to periodically interrupt the operations of the mixing device to remove the scale. By the way, this phenomenon is not a part of prior art.

Relevant pieces of the prior art will be described. In JP 2020-105045 A, the inventors have proposed to suppress the formation of crystal nuclei and increase the particle size of the recovered dihydrate gypsum by reducing the time of the slurry staying in the mixing device. The inventors have described that the mixer is cylindrical, for example, but can be an open channel or the like. Moreover, WO 2016/199953 A1 discloses a slurry mixing system according to the prior art.

### Prior Art Documents

### Patent Documents

Patent Document 1: JP 6 336 385 B
Patent Document 2: JP 2020-105045 A
Patent Document 3: WO 2016/199953 A1

### Summary of the Invention

### Problems to be Solved by the Invention

The problem to be solved by the invention is to suppress the generation of the gypsum scale in the device for mixing the gypsum granules derived from wasted gypsum boards with gypsum slurry.

A mixing method according to the invention comprises: a step for feeding hemihydrate and/or anhydrous type III gypsum granules derived from wasted gypsum boards into a flow path of aqueous gypsum slurry containing dihydrate gypsum and mixing said gypsum granules with the gypsum slurry; and a step for supplying the slurry after mixing to a deposition tank of dihydrate gypsum.

According to the invention, the gypsum slurry is supplied into the flow path from an inlet of the flow path, said gypsum granules are fed from an above position into the gypsum slurry, and, after feeding said gypsum granules, the gypsum slurry is made to flow to an outlet of the flow path while an upper surface of the gypsum slurry is always exposed to air in the flow path.

According to the invention, the gypsum slurry is fed from the outlet of the flow path into a pipe by free fall, and wherein the gypsum slurry is made to impinge on a far side surface of the pipe as viewed from the outlet and fall or the gypsum slurry is made to fall down a center portion of the pipe such that the gypsum slurry does not fall along the near side surface of the pipe as viewed from the outlet.

A mixing device is one for mixing gypsum granules derived from wasted gypsum boards and gypsum slurry and supplying the slurry after mixing to a deposition tank of dihydrate gypsum.

The device comprises a flow path and a pipe both for the gypsum slurry.

The flow path is configured to receive the gypsum slurry from an inlet of the flow path, to receive said gypsum granules from an above position into the gypsum slurry, and, after receiving said gypsum granules, to flow the gypsum slurry to an outlet of the flow path while an upper surface of the gypsum slurry is always exposed to air in the flow path.

The pipe is configured to receive the gypsum slurry freely falling from the outlet of the flow path and to make the gypsum slurry impinge on a far side surface of the pipe as viewed from the outlet and fall or make the gypsum slurry fall down a center portion of the pipe such that the gypsum slurry does not fall along the near side surface of the pipe as viewed from the outlet.

Generally, gypsum scale is very hard and tough, and, in particular, annular gypsum scale is difficult to remove. In contrast, if the scale attaches to only a portion of the flow path or the pipe, rather than the entire circumference, namely, the entire inner surface, of them, the scale can be easily peeled off. If, in the flow path, the upper surface of the slurry is always exposed to air, then the scale does not adhere in an annular pattern, or in a ring-like pattern, in the flow path. Further, if the slurry is made to impinge on the far side of the pipe, or if the slurry is made to fall down the center portion of the pipe, no annular scale covering the 360 degree circumference does form. Thus, according to the invention, the gypsum scale attached to the mixing device can be easily removed.

Preferably the flow path is straight. In the embodiment, the flow path is U-shaped in cross-section, but it can be pipe-shaped, and it is important that the upper surface of the slurry is always exposed to air. Further, it is important that there is no point from the pipe to the deposition tank where the slurry expands 360 degrees and flows around the entire circumference of the flow path or the pipe, in a plane perpendicular to the flow direction. In the flow path with an open top surface, the top of the slurry is always exposed to air, and, in the pipe, the slurry flows along only part of the inner wall or in the center portion of the pipe.

Preferably, the cross-sectional shape perpendicular to the direction of the flow path is a curved surface such as a U-shaped one, rather than a rectangle having vertices at the corners. If the flow path has a vertex in its cross-section at a height lower than the upper surface of the slurry, the slurry tends to stay at the vertex and form scale. Preferably, the flow path has a constant cross-sectional shape from the inlet to the outlet of the flow path. If the cross-sectional shape is not constant, the slurry easily stays to form the scale. Similarly, a circular pipe is preferable to one having corners, and a pipe having a constant thickness is preferable. Polygonal pipes having corners easily form scale at the corners, and pipes having not constant thickness easily form scale.

Gypsum granules are supplied to the deposition tank via the mixing device and are not directly fed to the deposition tank so that the scale is generated only within the mixing device. Further, according to the invention, when the slurry mixed with the gypsum granules arrives at the deposition tank, the scale is not generated, since the degree of super saturation decreases.

Preferably, the inner surfaces of the flow path and the pipe are covered with a film or a plate both made of fluororesin and the growth of gypsum scale on the inner surfaces is delayed. The fluororesin films and plates have a long service life in the gypsum slurry. Since the gypsum scale does not easily attach to the fluororesin films and plates, the growth of the scale is delayed.

Preferably, the gypsum slurry is fed from a feeding pipe to the flow path, and the flow path has a larger cross-section than the feeding pipe has such that the upper surface of the gypsum slurry in the flow path is always exposed to air. Here, the cross-section of the flow path is the maximum cross-sectional area in which the slurry can flow and is not the cross-sectional area of the slurry. For example, a flow path comprising a pipe has a cross-sectional area corresponding to the whole cross-sectional area inside the pipe. Further, if the 100% volume in the feeding pipe is occupied by the slurry, in the flow path having a larger cross-section than the feeding pipe, the upper surface of the slurry is exposed to air.

### Brief Description of the Drawings

- [Fig. 1]: Fig. 1 is a schematic diagram of the recovery system for dihydrate gypsum using a mixing device.
- [Fig. 2]: Fig. 2 is a vertical cross-sectional view of a mixing device.
- [Fig. 3]: Fig. 3 is a vertical cross-sectional view of the mixing device in the direction of III-III of Fig. 2.
- [Fig. 4]: Fig. 4 is a horizontal cross-section of the mixing device in the direction of IVa- IVb of Fig. 2.
- [Fig. 5]: Fig. 5 is a vertical cross-sectional view of the conventional mixing tank.

### Features for Carrying out the Invention

One embodiment for carrying out the present invention will be described. The scope of the invention shall be determined based on the claims and in accordance with the understanding of those skilled in the art, taking into consideration the description of the specification and the well-known arts in this field. The scope of the invention is not limited by the embodiment. Embodiment

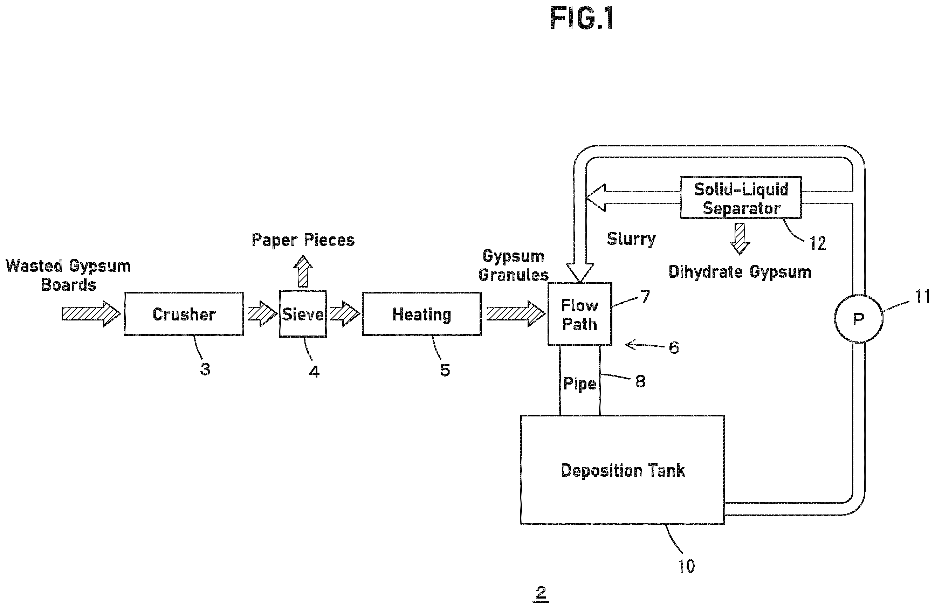

One embodiment of the invention is shown in Figs. 1 to 4. Fig. 1 shows a recovery system 2 for recovering dihydrate gypsum from wasted gypsum boards. Wasted gypsum boards comprising cardboard paper and dihydrate gypsum are crushed by a crusher 3, and the resultant paper pieces and dihydrate gypsum are separated by a sieve 4. The dihydrate gypsum is then heated in a heating device 5 and converted into hemihydrate and/or anhydrous type III gypsum granules.

The mixing device 6 comprises a flow path 7 and a pipe 8. The gypsum granules are fed into an aqueous slurry of dihydrate gypsum in the flow path 7, and the gypsum slurry after mixing is fed from the pipe 8 into a deposition tank 10. Dihydrate gypsum crystals are made grown in the gypsum slurry in the deposition tank 10, and the gypsum slurry is supplied by a fluid pump 11 to a solid-liquid separator 12 such as a filter press for separating dihydrate gypsum granules from the gypsum slurry. The remaining gypsum slurry is re-circulated to the flow path 7.

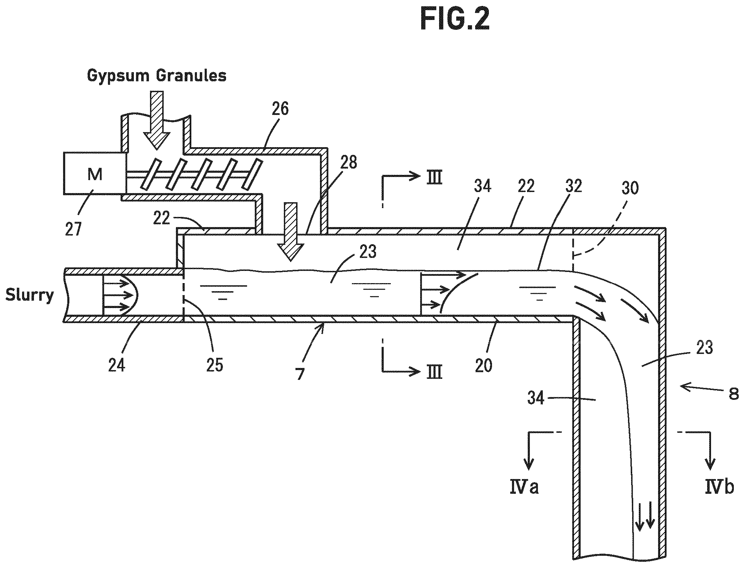

Figs. 2 to 4 show the structures of the flow path 7 and the pipe 8. While the flow path 7 can include a bent portion where the flow of the aqueous slurry 23 containing dihydrate gypsum bends, preferably, the flow path is straight. While the flow path 7 is indicated horizontally in Fig. 2, actually, it is inclined downward from an inlet 25 to an outlet 30 such that the accumulation of foreign matters such as gravel is prevented. The vertical cross-section of the flow path 7, perpendicular to the flow direction, is, for example, U-shaped. As shown in Fig. 3, the flow path 7 comprises a flow path main body 20, for example, made of stainless steel with a U-shaped cross-section and an inner lining 21 made of fluororesin. The lining 21 may be a film or a plate. The upper opening of the flow path 7 is, for example, covered by tread plates 22. In addition, the flow path 7 can be a pipe, and the slurry is made to flow, for example, in the lower 1/2 to 1/4 portion of the cross-section of the pipe, and, in the upper portion of the pipe, there is always present air over the slurry.

The fluororesin lining 21 delays the growth of the gypsum scale. Further, the fluororesin lining 21 is highly durable in the gypsum slurry and is usable for more than one year, for example. In contrast, a lining made of soft polyvinyl chloride resin or the like has a service life of about half year in gypsum slurry. Further, the inner lining 21 may not be provided.

The slurry 23 is fed through a pipe 24 into the flow path, and the joint between the pipe 24 and the flow path 7 is the inlet 25 of the flow path 7. Also, a feeding device 26, such as a screw conveyor, feeds hemihydrate and/or anhydrous type III gypsum granules into the flow path 7. Indicated by 27 is a motor of the feeding device 26 and indicated by 28 is the feed port. The slurry in the pipe 24 and the flow path 7 has the velocity distributions shown schematically in Fig. 2. The feed port 28 is located upstream of the center of the flow path 7 in the flow direction for promoting the mixing of the gypsum granules with the slurry. The gypsum slurry 23 flows at the bottom portion of the flow path 7, and the liquid surface 32 of the slurry 23 is always exposed to air 34, so that no annular scaling occurs in the flow path 7. The diameter of the pipe 24 is, for example, 100 mm to 200 mm, the diameter of the flow path 7 is about twice the diameter of pipe 24, and the average velocity of slurry 23 in the flow path 7 is, for example, 2 to 4 m/sec.

From the outlet 30 of the flow path 7, the slurry 23 falls freely into the pipe 8, and because of the high velocity, the slurry impinges on the opposite side of the pipe 8 as viewed from the flow path 7 and falls. The pipe 8 is preferably covered with an inner lining 31 comprising a fluororesin membrane or a fluororesin pipe on the inner surface of the pipe. Although slurry droplets attach on various parts of the pipe 8, however, as shown within the single-dotted line in Fig. 4, the slurry 23 does not flow in such a way that the slurry expands in 360-degrees covering on the whole inner surface of the pipe 8. Further, the droplets attaching to the pipe 8 do not grow to the scale adhering in an annular pattern without gaps. As an alternative resolution, the diameter of the pipe 8 is increased so that the slurry 23 falls down the center portion of pipe 8 without impinging the inner surface of the pipe. The diameter of the pipe 8 is about the same as the diameter of the flow path 7, for example. By the way, the direction of the pipe 8 is not limited to vertical.

The gypsum slurry flows from the pipe 8 to the deposition tank 10. Between the pipe 8 and the deposition tank 10, there may be an additional flow path where the top of the liquid surface is always exposed to air, or there may be an additional pipe other than the pipe 8.

The embodiment has the following advantageous features.
1) Gypsum scale is prevented from adhering to the inside of the mixing device 6 in an annular pattern. While gypsum scale is generally solid and tough, it can be easily peeled off, since it is not in an annular pattern.
2) The linings 21 and 31 made of fluororesin delay the growth of gypsum scale. Linings 21, 31 made of fluororesin are more durable in gypsum slurry than soft polyvinyl chloride or the like.
3) The large-diameter flow path 7 is connected to the pipe 24 such that the liquid surface of the slurry in the flow path 7 is always exposed to air.

### Description of Reference Numerals

- 2: recovery system for dihydrate gypsum
- 3: crusher
- 4: sieve
- 5: heating device
- 6: mixing device
- 7: flow path
- 8: pipe
- 10: deposition tank
- 11: fluid pump
- 12: solid-liquid separator
- 20: flow path main body
- 21, 31: lining
- 22: tread plate
- 23: gypsum slurry
- 24: pipe
- 25: inlet
- 26: feeding device
- 27: motor
- 28: feeding port
- 30: outlet
- 32: liquid level
- 34: air

## Claims

1. A mixing method for mixing gypsum granules derived from wasted gypsum boards and gypsum slurry comprising: a step for feeding hemihydrate and/or anhydrous type **III** gypsum granules derived from wasted gypsum boards into a flow path of aqueous gypsum slurry containing dihydrate gypsum and mixing said gypsum granules with the gypsum slurry; and a step for supplying the slurry after mixing to a deposition tank (10) of dihydrate gypsum,
wherein the gypsum slurry (23) is supplied into the flow path (7) from an inlet (25) of the flow path (7), said gypsum granules are fed from an above position (28) into the gypsum slurry (23), and, after feeding said gypsum granules, the gypsum slurry (23) is made to flow to an outlet (30) of the flow path (7) while an upper surface of the gypsum slurry (23) is always exposed to air (34) in the flow path (7), and
wherein the gypsum slurry (23) is fed from the outlet (30) of the flow path (7) into a pipe (8) by free fall, and wherein the gypsum slurry is made to impinge on a far side surface of the pipe (8) as viewed from the outlet and fall or the gypsum slurry (23) is made to fall down a center portion of the pipe (8) such that the gypsum slurry (23) does not fall along the near side surface of the pipe (8) as viewed from the outlet (30).

2. The mixing method for mixing gypsum granules derived from wasted gypsum boards and gypsum slurry according to claim 1, wherein inner surfaces of the flow path (7) and the pipe (8) are covered with a film or a plate (21, 31) both made of fluororesin and the growth of gypsum scale on the inner surfaces is delayed.

3. The mixing method for mixing gypsum granules derived from wasted gypsum boards and gypsum slurry according to claim 1 or 2, wherein the gypsum slurry (23) is fed from a feeding pipe (24) to the inlet (25) of said flow path (7), and the flow path (7) has a larger cross-section than the feeding pipe (24) has such that the upper surface of the gypsum slurry (23) in the flow path (7) is always exposed to air (34).

4. The mixing method for mixing gypsum granules derived from wasted gypsum boards and gypsum slurry according to claim 1, **characterized in that** the flow path (7) is straight and without a bent portion where the flow of the aqueous slurry (23) containing dihydrate gypsum bends.

5. The mixing method for mixing gypsum granules derived from wasted gypsum boards and gypsum slurry according to claim 4, **characterized in that** the cross-sectional shape perpendicular to the direction of the flow path (7) is a curved surface.

6. The mixing method for mixing gypsum granules derived from wasted gypsum boards and gypsum slurry according to claim 5, **characterized in that** the flow path (7) has a constant cross-sectional shape from the inlet (25) to the outlet (30) of the flow path (7).

## Patentansprüche

1. Mischverfahren zum Mischen von Gipsgranulat, das aus ausrangierten Gipsplatten gewonnen wurde, und Gipsschlamm, umfassend: einen Schritt zum Einbringen von aus ausrangierten Gipsplatten gewonnenem Hemihydrat- und/oder wasserfreiem Typ-III-Gipsgranulat in einen Strömungsweg von wässrigem Gipsschlamm, der Dihydratgips enthält, und zum Mischen des Gipsgranulats mit dem Gipsschlamm; und einen Schritt zum Zuführen der Aufschlämmung nach dem Mischen in einen Absetzbehälter (10) für Dihydratgips,
wobei die Gipsaufschlämmung (23) von einem Einlass (25) des Strömungswegs (7) in den Strömungsweg (7) zugeführt wird, das Gipsgranulat von einer darüber befindlichen Position (28) in die Gipsaufschlämmung (23) eingeleitet wird, und nach dem Einbringen des Gipsgranulats die Gipsaufschlämmung (23) zu einem Auslass (30) des Strömungswegs (7) strömen gelassen wird, während eine obere Oberfläche der Gipsaufschlämmung (23) im Strömungsweg (7) stets der Luft (34) ausgesetzt ist, und
wobei die Gipsaufschlämmung (23) vom Auslass (30) des Strömungswegs (7) durch freien Fall in eine Leitung (8) geleitet wird, und wobei die Gipsaufschlämmung so auf eine vom Auslass aus gesehen wegliegende Seitenfläche der Leitung (8) auftreffen gelassen wird oder die Gipsaufschlämmung (23) so durch einen mittleren Abschnitt der Leitung (8) nach unten fallen gelassen wird, dass die Gipsaufschlämmung (23) nicht entlang der vom Auslass (30) aus gesehen naheliegenden Seitenfläche der Leitung (8) fällt.

2. Mischverfahren zum Mischen von Gipsgranulat, das aus ausrangierten Gipsplatten gewonnen wurde, und Gipsschlamm nach Anspruch 1, wobei die Innenflächen des Strömungswegs (7) und der Leitung (8) mit einer Folie oder einer Platte (21, 31) bedeckt sind, die beide aus Fluorharz bestehen, und das Wachstum von Gipsablagerungen auf den Innenflächen verzögert wird.

3. Mischverfahren zum Mischen von Gipsgranulat, das aus ausrangierten Gipsplatten gewonnen wurde, und Gipsschlamm nach Anspruch 1 oder 2, wobei der Gipsschlamm (23) aus einer Zuführleitung (24) zum Einlass (25) des Strömungswegs (7) zugeführt wird, und der Strömungsweg (7) einen größeren Querschnitt aufweist als die Zuführleitung (24), so dass die obere Oberfläche der Gipsaufschlämmung (23) im Strömungsweg (7) stets der Luft (34) ausgesetzt ist.

4. Mischverfahren zum Mischen von Gipsgranulat, das aus ausrangierten Gipsplatten gewonnen wurde, und Gipsschlamm nach Anspruch 1, **dadurch gekennzeichnet, dass** der Strömungsweg (7) gerade verläuft und keinen gekrümmten Abschnitt aufweist, an dem sich die Strömung des Dihydratgip enthaltenden wässrigen Schlamms (23) krümmt.

5. Mischverfahren zum Mischen von Gipsgranulat, das aus ausrangierten Gipsplatten gewonnen wurde, und Gipsschlamm nach Anspruch 4, **dadurch gekennzeichnet, dass** die Querschnittsform senkrecht zur Richtung des Strömungswegs (7) eine gekrümmte Fläche ist.

6. Mischverfahren zum Mischen von Gipsgranulat, das aus ausrangierten Gipsplatten gewonnen wurde, und Gipsschlamm nach Anspruch 5, **dadurch gekennzeichnet, dass** der Strömungsweg (7) vom Einlass (25) bis zum Auslass (30) des Strömungswegs (7) eine konstante Querschnittsform aufweist.

## Revendications

1. Un procédé de mélange destiné à mélanger des granulés de gypse issus de plaques de plâtre usagées et une boue de gypse, comprenant : une étape consistant à introduire des granulés de gypse de type III hémihydraté et/ou anhydre, issus de plaques de plâtre usagées, dans une voie d'écoulement de boue de gypse aqueuse contenant du gypse dihydraté, et à mélanger lesdits granulés de gypse avec la boue de gypse ; et une étape consistant à acheminer la boue, après mélange, vers un réservoir de dépôt (10) de gypse dihydraté,
dans lequel la boue de gypse (23) est introduite dans la voie d'écoulement (7) à partir d'une entrée (25) de ca voie, lesdits granulés de gypse sont introduits depuis une position supérieure (28) dans la boue de gypse (23), et, après l'introduction desdits granulés de gypse, la boue de gypse (23) est amenée à s'écouler vers une sortie (30) de la voie d'écoulement (7) tandis que la surface supérieure de la boue de gypse (23) est toujours exposée à l'air (34) dans la voie d'écoulement (7), et
dans lequel la boue de gypse (23) est introduite depuis la sortie (30) de la voie d'écoulement (7) dans un tuyau (8) par chute libre, et dans lequel la boue de gypse est amenée à heurter une surface latérale opposée du tuyau (8) vue depuis la sortie, ou la boue de gypse (23) est amenée à tomber le long d'une partie centrale du tuyau (8) de telle sorte que la boue de gypse (23) ne tombe pas le long de la surface latérale proche du tuyau (8) vue depuis la sortie (30).

2. Le procédé de mélange destiné à mélanger des granulés de gypse issus de plaques de plâtre usagées et une boue de gypse, selon la revendication 1, dans lequel les surfaces internes de la voie d'écoulement (7) et du tuyau (8) sont recouvertes d'un film ou d'une plaque (21, 31) tous deux en résine fluorée, ce qui retarde la formation de dépôts de gypse sur ces surfaces internes.

3. Le procédé de mélange destiné à mélanger des granulés de gypse issus de plaques de plâtre usagées et une boue de gypse selon la revendication 1 ou 2, dans lequel la boue de gypse (23) est acheminée depuis un tuyau d'alimentation (24) vers l'entrée (25) de la voie d'écoulement (7), et la voie d'écoulement (7) présente une section transversale plus grande que celle du tuyau d'alimentation (24), de telle sorte que la surface supérieure de la boue de gypse (23) dans la voie d'écoulement (7) soit toujours exposée à l'air (34).

4. Le procédé de mélange destiné à mélanger des granulés de gypse issus de plaques de plâtre usagées et une boue de gypse selon la revendication 1, **caractérisé en ce que** la voie d'écoulement (7) est rectiligne et ne comporte aucune partie coudée où le flux de la boue aqueuse (23) contenant du gypse dihydraté effectue un coude.

5. Le procédé de mélange destiné à mélanger des granulés de gypse issus de plaques de plâtre usagées et une boue de gypse, selon la revendication 4, **caractérisé en ce que** la forme de la section transversale perpendiculaire à la direction de la voie d'écoulement (7) est une surface courbe.

6. Le procédé de mélange destiné à mélanger des granulés de gypse issus de plaques de plâtre usagées et une boue de gypse, selon la revendication 5, **caractérisé en ce que** la voie d'écoulement (7) présente une section transversale constante depuis l'entrée (25) jusqu'à la sortie (30) de la voie d'écoulement (7).
